# EUROPÄISCHE PATENTSCHRIFT

(11) **EP 2 475 906 B1**
(45) Veröffentlichungstag und Bekanntmachung des Hinweises auf die Patenterteilung: **13.08.2014**
(21) Anmeldenummer: 10724319.8
(22) Anmeldetag: 14.06.2010
(51) Int. Cl.: F16D 23/02, F16D 23/06

(54) **SYNCHRONISIERUNG FÜR EIN SCHALTGETRIEBE**
SYNCHRONISATION DEVICE FOR A GEAR BOX
DISPOSITIF DE SYNCHRONISATION POUR BOÎTE DE VITESSES

(30) Priorität: 08.09.2009 DE 102009040541
(43) Veröffentlichungstag der Anmeldung: 18.07.2012
(73) Patentinhaber: Hoerbiger Antriebstechnik Holding GmbH, 86956 Schongau (DE)
(72) Erfinder: ECHTLER, Peter, 86972 Bernbeuren (DE); FÜRGUTH, Werner, 87640 Biessenhofen / Altdorf (DE); BINDER, Jürgen, 88367 Hohentengen (DE); KRAMER, Peter, 87784 Westerheim (DE); WEIHER, Christian, 86983 Lechbruck (DE); PRINKE, Stefan, 86971 Peiting (DE); SIELAFF, TiIo, 64295 Darmstadt (DE); SCHNELZER, Thomas, 86971 Peiting (DE)
(74) Vertreter: Prinz & Partner
(86) Internationale Anmeldenummer: PCT/EP2010/003556
(87) Internationale Veröffentlichungsnummer: WO 2011/029490

(56) Entgegenhaltungen:
- AT-B- 267 335
- DE-A1- 1 910 884

## Beschreibung

Die Erfindung betrifft eine Synchronisierung für ein Schaltgetriebe gemäß dem Oberbegriff des Anspruchs 1. Mit einer solchen Synchronisierung kann die Drehzahl eines Gangrads an die Drehzahl einer Getriebewelle angepasst werden kann, um das Gangrad mit der Getriebewelle formschlüssig zu koppeln.

Derartige Synchronisierungen sind bereits allgemein bekannt.

Insbesondere gibt es im Stand der Technik bereits Schaltgetriebe mit einer sogenannten Servo-Synchronisierung zur Verbesserung des Synchronisationsvorgangs. Hierbei wird die Energie aus dem Drehmoment zueinander verdrehbarer Zahnräder genutzt, um die über den Schalthebel des Schaltgestänges auf die Synchronisierung aufgebrachte Schaltkraft zu verstärken.

Beispielsweise offenbart die DE 10 2006 044 352 B3 eine Servo-Synchronisierung, bei der ein axial verschiebliches, schwenkbar gelagertes Druckstück in einer Ausnehmung der Synchronnabe aufgenommen ist. Das Druckstück und die Synchronnabe weisen jeweils Synchro-Servo-Schrägen auf, welche bei einem Schaltvorgang des Getriebes zusammenwirken und zu einer Schaltkraftverstärkung führen. Die beschriebenen Ausführungsformen beschränken sich dabei auf Sperrsynchronisationsgetriebe, bei denen sowohl eine Sperrverzahnung als auch ein Reibkonus an einem Synchronring der Getriebesynchronisation ausgebildet sind. Dadurch wird die Herstellung des Synchronrings recht aufwendig und teuer. Außerdem sind auch das Anformen der Synchro-Servo-Schrägen an der Synchronnabe sowie die schwenkbare Lagerung der Druckstücke fertigungstechnisch mit erheblichem Aufwand verbunden.

Die AT 267 335 B zeigt eine Synchronisierung für ein Schaltgetriebe gemäß dem Oberbegriff des Anspruchs 1. Es ist eine Synchronisierungsbaugruppe vorgesehen, die aus einem Sperrzahnkranz und einem Reibring besteht und bei der die durch eine Schaltgabel aufgebrachte axiale Kraft verstärkt auf den Reibring übertragen wird. Die Verstärkung erfolgt durch ein Hebelsystem, dass zwischen dem Sperrzahnkranz und dem Reibring angebracht ist und das axiale Kräfte auf den Sperrzahnkranz in Richtung eines Gegenkupplungsteiles verstärkt auf den Reibring überträgt. Durch das Hebelsystem ist die Synchronisierungsbaugruppe komplex und aufwendig herzustellen.

Aufgabe der Erfindung ist die Schaffung einer Getriebesynchronisierung, die mit geringem Aufwand herstellbar ist und eine Schaltkraftverstärkung aufweist.

Diese Aufgabe wird bei einer Synchronisierung der eingangs genannten Art mit den Merkmalen des kennzeichnenden Teils des Anspruchs 1 gelöst. Erfindungsgemäß wird die aus fertigungstechnischen Gründen vorteilhafte, strukturelle Trennung von Sperrfunktion (Sperrring) und Reibfunktion (Reibring) auch dazu genutzt, mit geringem Aufwand eine Reibkraftverstärkung in die Synchronisierung zu integrieren. Im Übrigen ist die Synchronisierung aufgrund der Trennung von Sperrring und Reibring "verschleißneutral". Dies bedeutet, dass die Schaltkraftverstärkung durch eine größere axiale Relativbewegung zwischen Sperrring und Reibring einen Belagverschleiß kompensiert und damit eine verschleißunabhängige Sperrstellung sowie eine weitgehend konstante Sperrsicherheit gewährleistet.

Vorzugsweise ist in der Nabe mindestens ein Druckstück angeordnet, das eine axiale Schaltbewegung der Schaltmuffe auf die Synchronisierungsbaugruppe überträgt.

Besonders bevorzugt wirkt dieses Druckstück mit dem Reibring zusammen und kann in axialer Richtung insbesondere formschlüssig mit dem Reibring gekoppelt sein. Infolge dieser axialen Formschlussverbindung zwischen Druckstück und Reibring werden unerwünschte Schleppmomente im Schaltgetriebe minimiert, da das Druckstück beim Auslegen eines Gangs relativ zur Nabe in eine axiale Mittenposition bewegt wird und infolge der Formschlussverbindung den Reibring axial "mitnimmt". Diese Mitnahme des Reibrings führt zu einer Zwangslüftung der Reibverbindung, das heißt zu einer zwangsläufigen Trennung der Reibfläche des Reibrings von einer mit dem Gangrad des Schaltgetriebes gekoppelten Reibfläche. Die Vorteile einer solchen Zwangslüftung lassen sich dabei konstruktiv sehr einfach durch die Formschlussverbindung, insbesondere eine radiale Steckverbindung zwischen Druckstück und Reibring realisieren.

In einer Ausführungsvariante ist in axialer Richtung auf beiden Seiten der Schaltmuffe eine Synchronisierungsbaugruppe angeordnet, und das Druckstück ist mit den beiden Reibringen der Synchronisierungsbaugruppen gekoppelt. Diese Kopplung kann insbesondere eine Formschlussverbindung in axialer Richtung sein. Neben der oben erwähnten Zwangslüftung führt die Kopplung der Reibringe durch das Druckstück bzw. die Druckstücke auch zu einer reduzierten Schwirrneigung sowie verringerten Rasselgeräuschen aufgrund der Zwangsführung am Druckstück bzw. an den Druckstücken.

Üblicherweise ist der Sperrring in Umfangsrichtung relativ zur Schaltmuffe um einen Indexwinkel drehbar. Dieser Indexwinkel wird dabei so gewählt, dass der Sperrring eine Axialverschiebung der Schaltmuffe an beiden Winkelanschlägen blockiert und in einer Mittenstellung zwischen den beiden Winkelanschlägen freigibt.

Diese begrenzte Relativdrehung zwischen dem Sperrring und der Schaltmuffe kann auf einfache Weise dadurch festgelegt werden, dass die Nabe und der Sperrring in Umfangsrichtung durch ineinandergreifende Vorsprünge und Ausnehmungen miteinander gekoppelt sind.

Die oben erwähnten Andruckflächen des Reibrings sind vorzugsweise an Mitnehmern vorgesehen, die sich in axialer Richtung durch den Sperrring erstrecken. Diese Mitnehmer sind ohnehin zur Kopplung zwischen Reibring und Sperrring in Umfangsrichtung notwendig und können mit geringem Aufwand so angepasst werden, dass sie die Andruckflächen für die Schaltkraftverstärkung aufweisen.

In einer weiteren Ausführungsform der Synchronisierung ist eine Feder vorgesehen, welche die Synchronisierungsbaugruppe in ihre Ausgangsstellung beaufschlagt. Als Ausgangsstellung wird hier ein Zustand der Synchronisierungsbaugruppe bezeichnet, in welchem der Reibring am Sperrring anliegt.

In einer Ausführungsvariante stützt sich die Feder an den Mitnehmern des Reibrings ab. Die Synchronisierungsbaugruppe aus Sperrring, Reibring, Feder und gegebenenfalls einem Haltering bildet in diesem Fall eine in sich geschlossene, vorgespannte Baugruppe, welche sich beim Zusammensetzen des Schaltgetriebes sehr einfach einbauen lässt.

In einer anderen Ausführungsvariante der Synchronisierung ist die Feder zwischen dem Reibring und dem Gangrad des Schaltgetriebes angeordnet. Durch diesen Aufbau beaufschlagt die Feder die Synchronisierungsbaugruppe nicht nur in ihre Ausgangsstellung, sondern in vorteilhafter Weise auch in eine Entlüftungsstellung, was zu einer Verringerung unerwünschter Schleppmomente im Schaltgetriebe führt.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 eine schematische Skizze eines Getriebeausschnitts zur allgemeinen Verdeutlichung des Kraftflusses;
- Figur 2 eine perspektivische Explosionsansicht einer erfindungsgemäßen Synchronisierung gemäß einer ersten Ausführungsform;
- Figur 3 einen Detailschnitt durch die zusammengesetzte Synchronisierung gemäß Figur 2 in einer nicht-geschalteten Neutralstellung;
- Figur 4 einen Detailschnitt einer Synchronisierungsbaugruppe der Synchronisierung gemäß Figur 2;
- Figur 5 eine Explosionsansicht der Synchronisierungsbaugruppe gemäß Figur 4;
- Figur 6 eine perspektivische Explosionsansicht einer erfindungsgemäßen Synchronisierung gemäß einer zweiten Ausführungsform;
- Figur 7 einen Detailschnitt durch die zusammengesetzte Synchronisierung gemäß Figur 6 in einer nicht-geschalteten Neutralstellung;
- Figur 8 einen Detailschnitt durch die zusammengesetzte Synchronisierung gemäß Figur 6 zu Beginn eines Schaltvorgangs;
- Figur 9 einen Detailschnitt durch die zusammengesetzte Synchronisierung gemäß Figur 6 in einer Synchronisationsstellung;
- Figur 10 einen Detailschnitt durch die zusammengesetzte Synchronisierung gemäß Figur 6 in einer geschalteten Kopplungsstellung;
- Figur 11 eine perspektivische Explosionsansicht einer erfindungsgemäßen Synchronisierung gemäß einer dritten Ausführungsform; und
- Figur 12 einen Detailschnitt durch die zusammengesetzte Synchronisierung gemäß Figur 11.

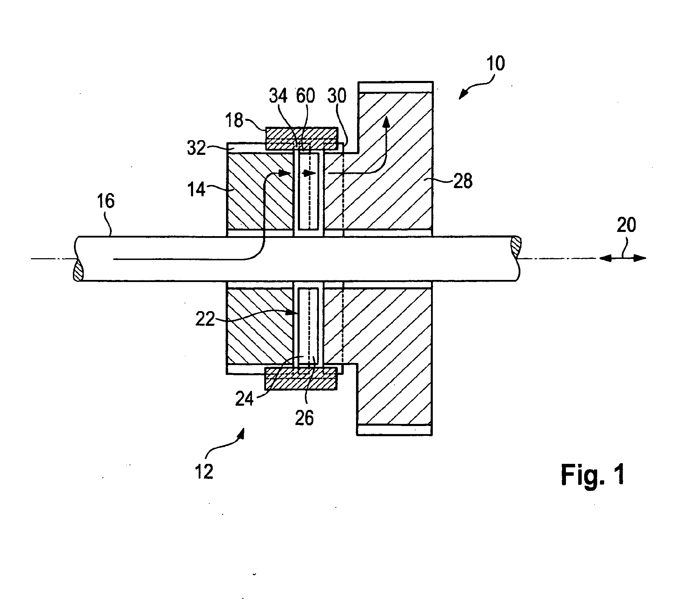

Die Figur 1 ist eine schematische Skizze zur prinzipiellen Veranschaulichung des Kraftflusses bei einem Schaltgetriebe 10 mit einer (Sperr-)Synchronisierung 12 in einer geschalteten Kopplungsstellung.

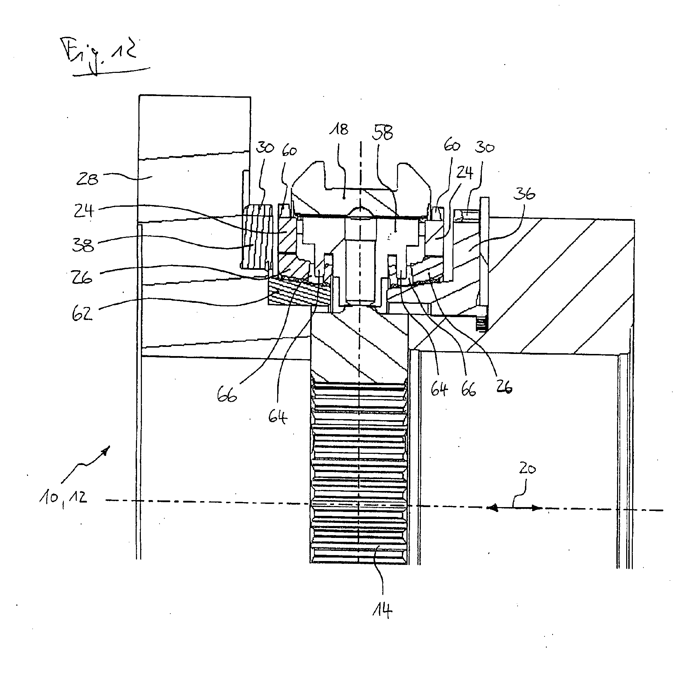

Die Synchronisierung 12 für das Schaltgetriebe 10 umfasst eine Nabe 14, die einer Getriebewelle 16 zugeordnet ist, eine Schaltmuffe 18, die drehfest auf der Nabe 14 angeordnet ist, jedoch in axialer Richtung 20 der Getriebewelle 16 auf der Nabe 14 begrenzt verschiebbar ist, und eine Synchronisierungsbaugruppe 22, die aus einem Sperrring 24 und einem Reibring 26 besteht. Ferner ist ein Gangrad 28 des Schaltgetriebes 10 dargestellt, wobei eine gangradseitige Schaltverzahnung 30 mit der Schaltmuffe 18 gekoppelt werden kann. Somit wird ein Drehmoment in der geschalteten Kopplungsstellung gemäß Figur 1 von der Getriebewelle 16 über die Nabe 14, die Schaltmuffe 18 und die Schaltverzahnung 30 auf das Gangrad 28 übertragen. Die Drehmomentübertragung erfolgt dabei über weitgehend drehfeste Formschlussverbindungen zwischen einer Außenverzahnung 32 der Nabe 14 und einer Innenverzahnung 34 der Schaltmuffe 18 sowie der Innenverzahnung 34 der Schaltmuffe 18 und der gangradseitigen Schaltverzahnung 30. Die Schaltverzahnung 30 ist beispielsweise an einem Kupplungskörper 36, der auch eine gangradseitige Reibfläche 44 aufweist, oder an einer Kupplungsscheibe 38 vorgesehen, wobei der Kupplungskörper 36 bzw. die Kupplungsscheibe 38 drehfest mit dem Gangrad 28 verbunden ist. Beide Varianten sind in Figur 12 angedeutet. Selbstverständlich ist es auch denkbar, dass die Schaltverzahnung 30 unmittelbar an einem axialen Fortsatz des Gangrads 28 angeformt ist.

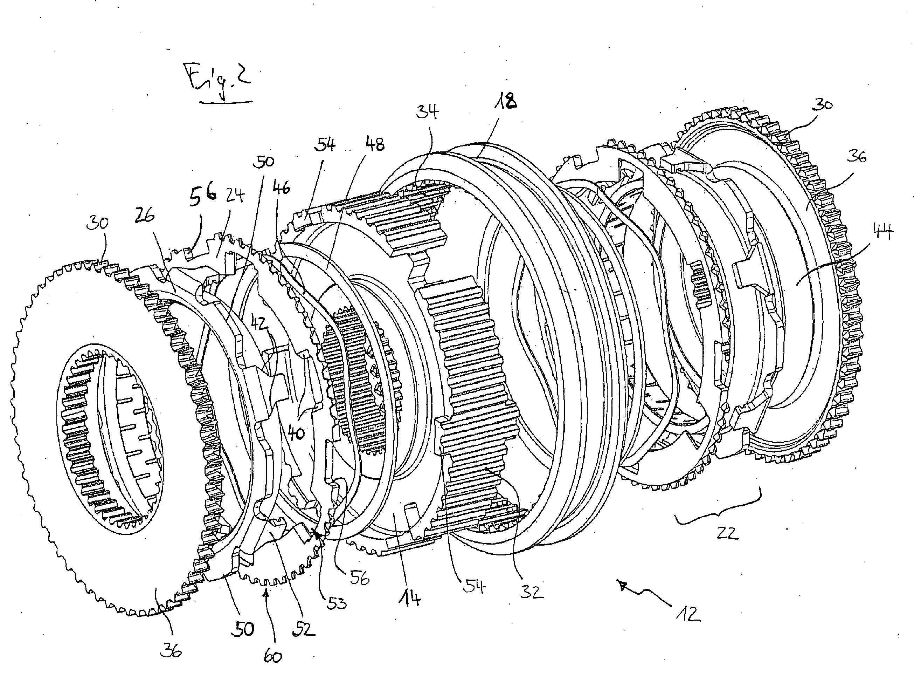

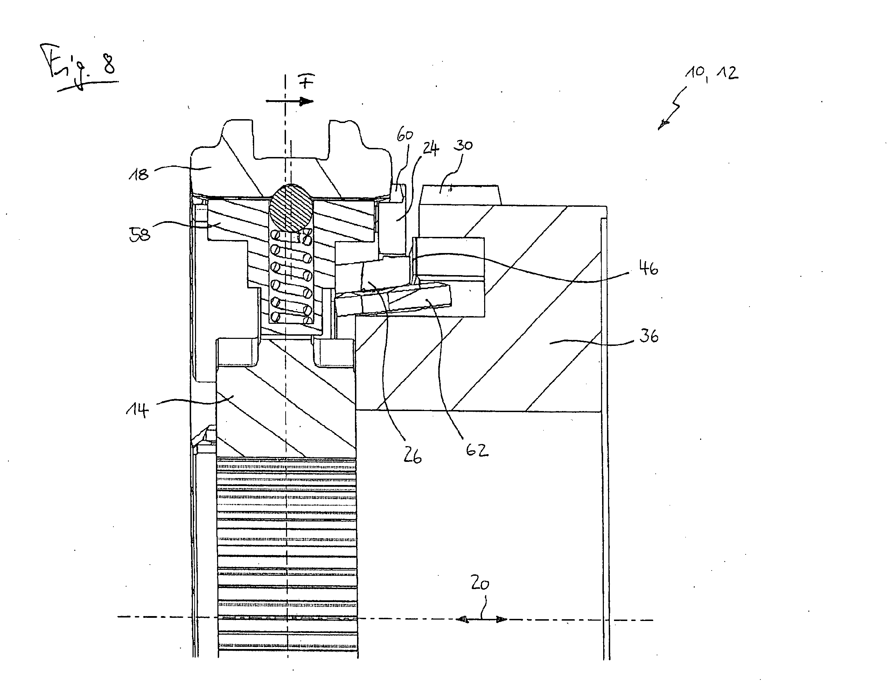

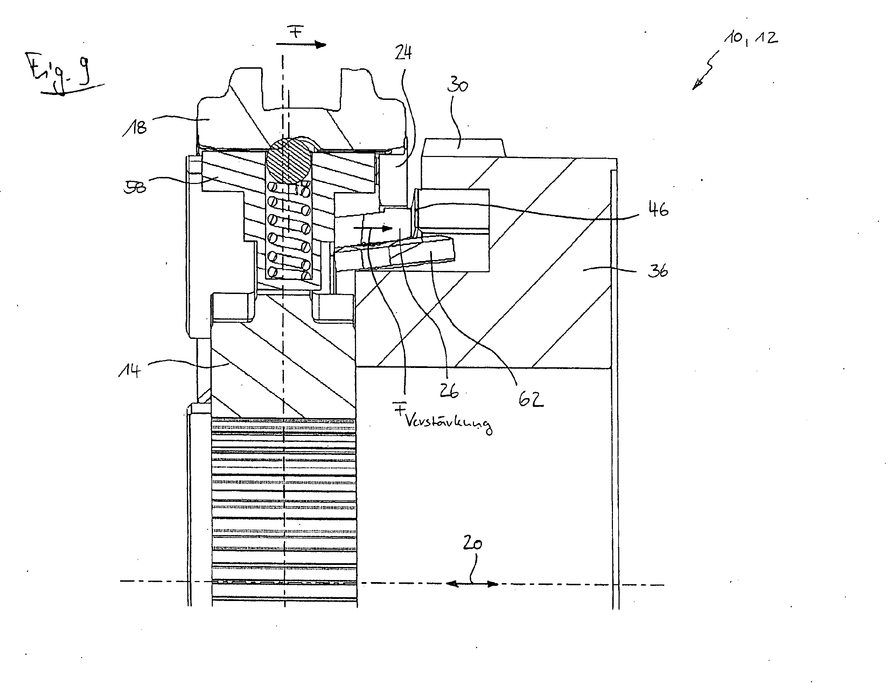

Die Figuren 2, 6 und 11 zeigen jeweils eine perspektivische Explosionsansicht der Synchronisierung 12 in unterschiedlichen Ausführungsformen. Dabei wird deutlich, dass der Sperrring 24 stets mit Schrägflächen 40 versehen ist, die mit Andruckflächen 42 am Reibring 26 derart zusammenwirken können, dass durch Verstärkung einer in axialer Richtung 20 von der Schaltmuffe 18 ausgeübten Schaltkraft F (vgl. Figur 8) eine axiale Andruckkraft F_{verstärkung} des Reibrings 26 gegen die Reibfläche 44 erzeugt wird (vgl. Figur 9), die mit dem Gangrad 28 des Schaltgetriebes 10 gekoppelt ist.

Eine erste Ausführungsform der Synchronisierung 12 ist in den Figuren 2 bis 5 gezeigt. Die dort verwendete Sperrsynchronisierung ähnelt der Borg-Warner-Synchronisierung, verwendet jedoch zusätzlich eine axiale Kraftverstärkung.

Zur Sperrsynchronisierung wird hier die vormontierte Synchronisierungsbaugruppe 22 verwendet, die aus dem Reibring 26, dem Sperrring 24, einer Feder 46 und einem Sicherungsring 48 besteht, der in Haltelaschen des Reibrings 26 eingesetzt wird. Der Sperrring 24 wird von der Feder 46 gegen radial überstehende Anlagelaschen 50 (Figur 2) am Reibring 26 oder einfach gegen den Bund des Reibrings 26 gedrückt.

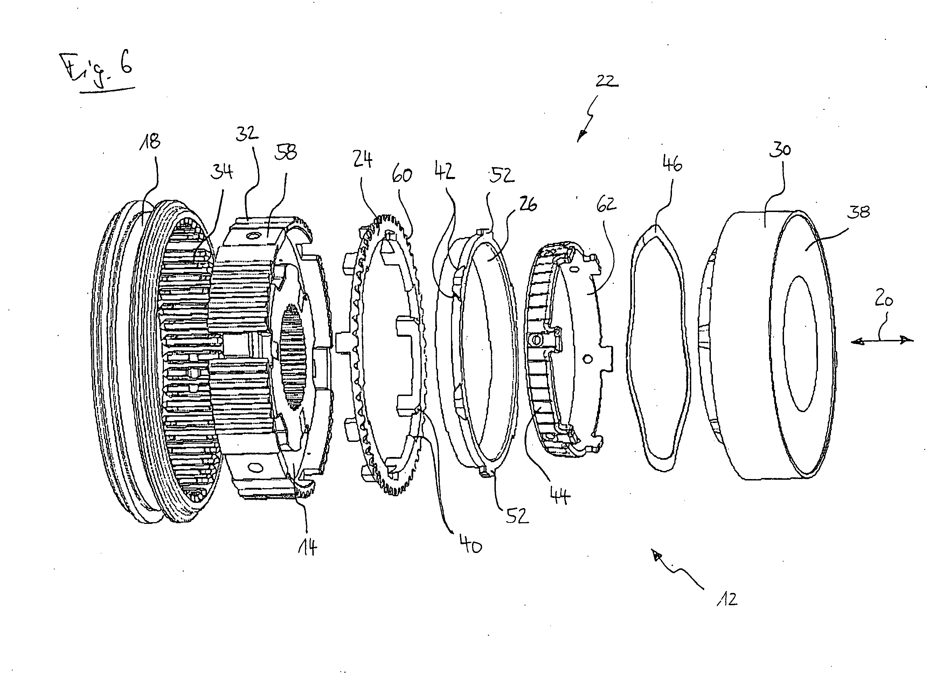

Der Reibring 26 ist mit Mitnehmern 52 versehen, die durch entsprechende Aussparungen 53 des Sperrrings 24 hindurchgreifen. Auf der Innenseite der Mitnehmer 52 ist der Sicherungsring 48 angebracht. Im Bereich des Übergangs zum eigentlichen Reibring 26 sind die Mitnehmer 52 jeweils mit schräg angestellten Andruckflächen 42 versehen, die mit entsprechenden Schrägflächen 40 am Sperrring 24 zusammenwirken. Die Synchronisierungsbaugruppe 22 aus Reibring 26, Sperrring 24 und Feder 46 ist an der Nabe 14 um einen Indexwinkel drehbar angebracht, und zwar mittels Vorsprüngen 54 an der Nabe 14, die in Ausnehmungen 56 am Sperrring 24 eingreifen. Alternativ können am Sperrring 24 auch Mitnehmernocken angebracht werden, die in entsprechende Aussparungen der Nabe 14 eingreifen (vgl. Figur 6).

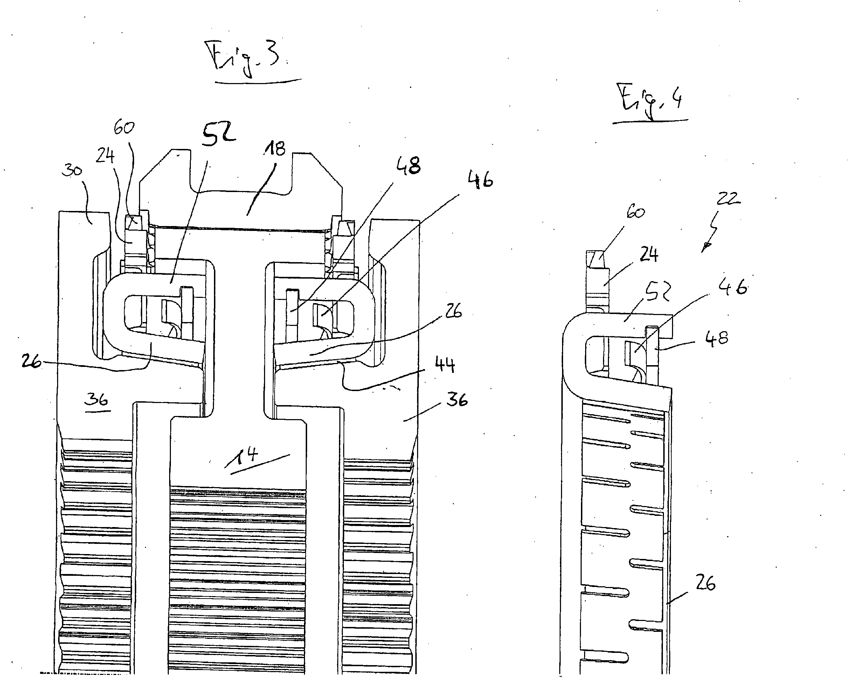

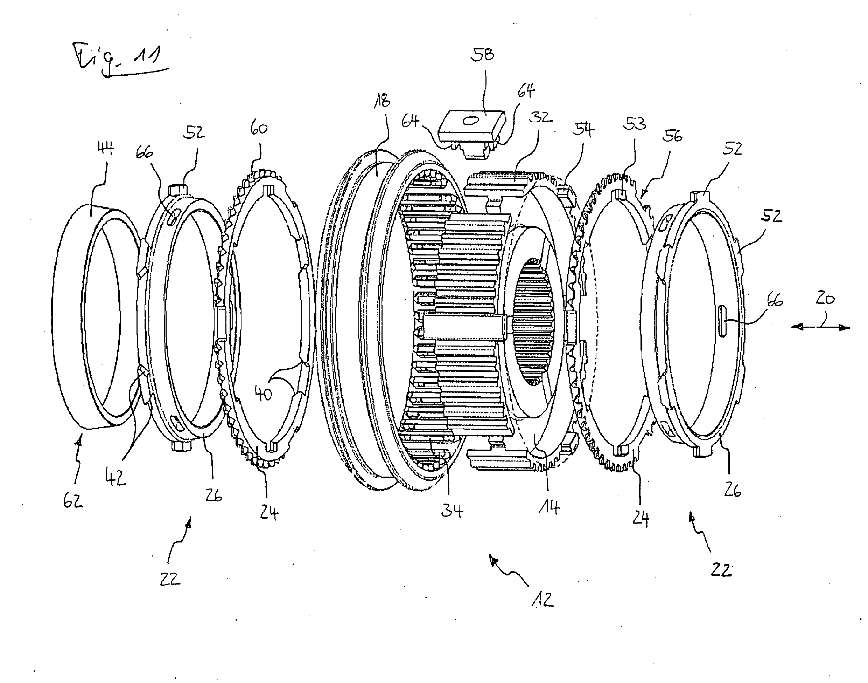

Wenn die Schaltmuffe 18 (ausgehend von der in Figur 3 gezeigten Mittenstellung) in axialer Richtung 20 betätigt wird, nimmt sie über die Druckstücke 58 (vgl. Figur 11) die Synchronisierungsbaugruppe 22 mit. Sobald ein Reibeingriff hergestellt ist, wird der Reibring 26 mitgenommen, wodurch sich der Sperrring 24 relativ zur Nabe 14 so verstellt, dass seine am Außenumfang angebrachte Verzahnung 60 ein Durchschalten der Schaltmuffe 18 sperrt. Aufgrund der schräg angestellten Andruckflächen 42 wird der Reibring 26 in axialer Richtung 20 zum Kupplungskörper 36 hin gedrückt, indem sich die Andruckflächen 42 am Sperrring 24 und dieser wiederum an der Nabe 14 abstützen. Dabei wird die Feder 46 gespannt. Das Ausmaß der axialen Verstärkung kann durch die Winkelausrichtung der Andruckflächen 42 eingestellt werden. Sobald der Drehzahlangleich erfolgt ist, kann die Schaltmuffe 18 den Sperrring 24 um den Indexwinkel zurückdrehen, sodass die Schaltmuffe 18 durchgeschaltet werden kann.

Wenn die Schaltmuffe 18 wieder in ihre Ausgangsstellung (Figur 3) zurückgestellt wird, gewährleistet die Feder 46, dass sich auch die Synchronisierungsbaugruppe 22 wieder in ihre Ausgangsstellung zurückstellt.

Der Vorteil dieser ersten Ausführungsform besteht darin, dass eine große axiale Kraftverstärkung realisierbar ist. Die Trennung von Reibring 26 und Sperrring 24 ermöglicht eine verschleißunabhängige Sperrstellung bzw. Sperrsicherheit. Abweichend von der gezeigten Ausführung sind auch Mehrflächensynchronisierungen möglich. Durch die Verwendung einer zusätzlichen Feder, die zu einer Zwangslüftung der Reibfläche 44 führt, ist eine Reduzierung unerwünschter Reibmomente (Schleppmomente) sowie der Rassel- und Schwirrneigung möglich.

Die Figuren 6 bis 11 zeigen eine zweite Ausführungsform der Synchronisierung 12 für das Schaltgetriebe 10.

Genau wie in der ersten Ausführungsform gemäß den Figuren 1 bis 5 sind die Andruckflächen 42 des Reibrings 26 an Mitnehmern 52 vorgesehen, die sich in axialer Richtung 20 durch den Sperrring 24 erstrecken. Diese Mitnehmer 52 sorgen somit für eine Kopplung des Reibrings 26 mit dem Sperrring 24 in Umfangsrichtung.

Ebenfalls analog zur ersten Ausführungsform ist die Feder 46 vorgesehen, welche die Synchronisierungsbaugruppe 22 in ihre Ausgangsstellung beaufschlagt. Als Ausgangsstellung wird dabei ein Zustand der Synchronisierungsbaugruppe 22 bezeichnet, in welchem der Sperrring 24 und der Reibring 26 aneinander anliegen.

Im Unterschied zur ersten Ausführungsform, in der sich die Feder 46 an den Mitnehmern 52, genauer an den Haltelaschen der Mitnehmer 52 abstützt, ist die Feder 46 gemäß den Figuren 6 bis 10 zwischen dem Reibring 26 und dem Gangrad 28 angeordnet.

Die Feder 46 stützt sich somit einerseits am Gangrad 28, alternativ am Kupplungskörper 36 oder an der Kupplungsscheibe 38 und andererseits am Reibring 26 ab. Sie beaufschlagt damit den Reibring 26 gegen den Sperrring 24, welcher sich wiederum an der Nabe 14 abstützt. Dadurch stehen die beteiligten Bauelemente ständig unter einer gewissen Vorspannung, wodurch die Schwirrneigung sowie Rasselgeräusche deutlich reduziert werden.

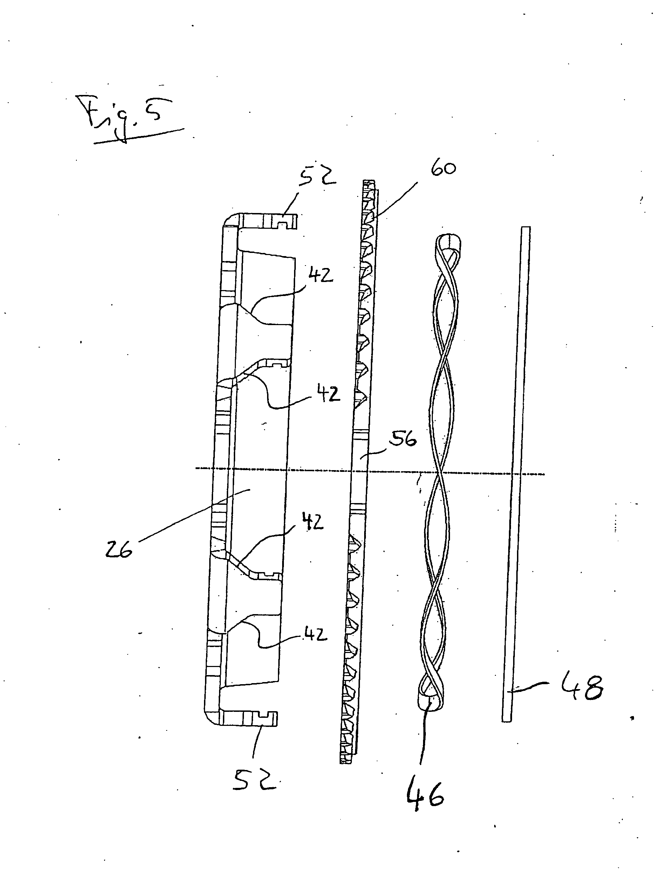

Mit der Feder 46 reicht in dieser zweiten Ausführungsform der Synchronisierung 12 ein einziges Federelement aus, um die Synchronisierungsbaugruppe 22 sowohl in ihre Entlüftungsstellung (beabstandet von der dem Gangrad 28 zugeordneten Reibfläche 44) als auch in ihre Ausgangsstellung (Reibring 26 in Anlage mit dem Sperrring 24) zu beaufschlagen. Zudem kann auf einen zusätzlichen Sicherungsring 48 (siehe z.B. Figur 5) verzichtet werden.

Außerdem ist im Unterschied zur ersten Ausführungsform, in der die Schaltverzahnung 30 und die konusförmige Reibfläche 44 am drehfest mit dem Gangrad 28 verbundenen Kupplungskörper 36 vorgesehen sind, die Schaltverzahnung 30 in der zweiten Ausführungsform am Kupplungskörper 36 und die Reibfläche 44 an einem im wesentlichen drehfest in den Kupplungskörper 36 einsteckbaren Konusring 62 vorgesehen.

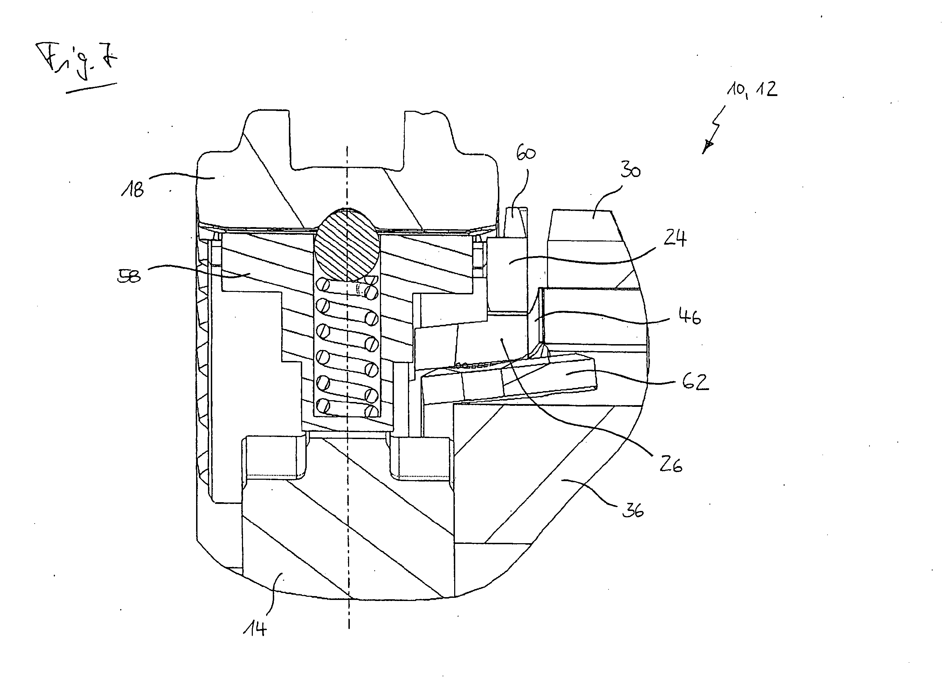

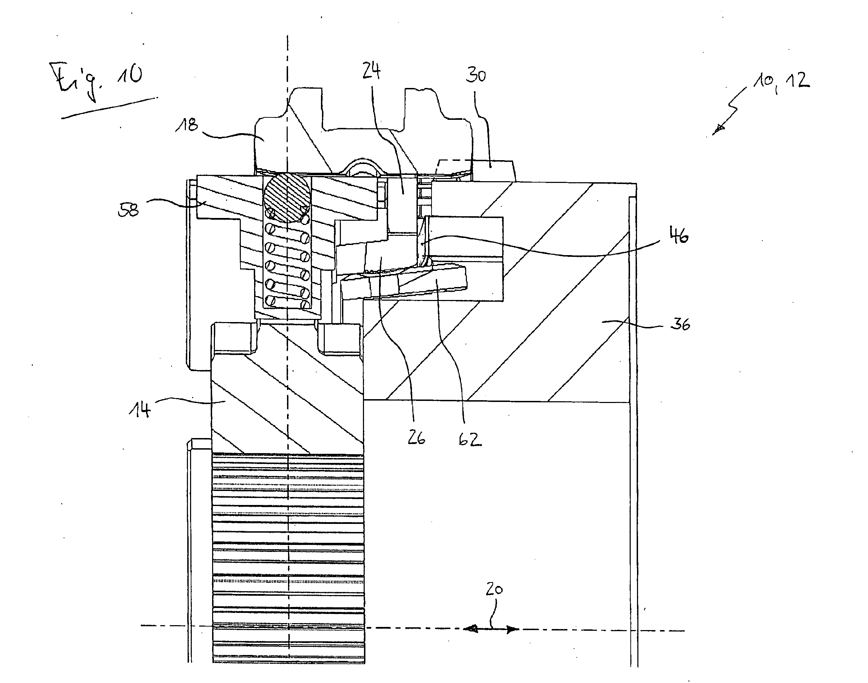

Die Figuren 7 bis 10 zeigen einen Schaltvorgang des Getriebes 10 ausgehend von einer nicht-geschalteten Neutralstellung (Figur 7) bis hin zu einer geschalteten Kopplungsstellung, in der die Getriebewelle 16 formschlüssig und weitgehend drehfest mit dem Gangrad 28 verbunden ist (Figur 10).

Ausgehend von der nicht-geschalteten Neutralstellung in Figur 7 wird die Schaltmuffe 18 von einer Schaltgabel (nicht gezeigt) mit der Schaltkraft F axial beaufschlagt. Über das bzw. die Druckstück(e) 58 wird die Schaltkraft F in den Sperrring 24 eingeleitet, der wiederum den Reibring 26 gegen die Reibfläche 44 des Konusrings 62 drückt (Figur 8). Durch den entstehenden Reibschluss wird der Sperrring 24 bei asynchronen Drehzahlen von Nabe 14 und Gangrad 28 relativ zur Schaltmuffe 18 um den Indexwinkel verdreht, sodass die Verzahnung 60 des Sperrrings 24 in einer Synchronisationsstellung gemäß Figur 9 eine weitergehende axiale Verschiebung der Schaltmuffe 18 blockiert.

Bei Ausbildung des Reibschlusses zwischen Reibring 26 und Reibfläche 44 entsteht zwischen dem Reibring 26 und dem Sperrring 24 ein Verdrehmoment, welches über die Andruckflächen 42 der Mitnehmer 52 und die Schrägflächen 40 des Sperrrings 24 übertragen wird. Aufgrund der Neigung der Schrägflächen 40 und der Andruckflächen 42 entsteht dabei eine axiale Andruckkraft F_{Verstarkung}, welche den Sperrring 24 und den Reibring 26 entgegen der Federkraft der Feder 46 axial auseinanderdrückt und den konusförmigen Reibring 26 gegen die ebenfalls konusförmige Reibfläche 44 beaufschlagt.

Diese Andruckkraft F_{Verstarkung} wirkt als Schaltkraftverstärkung, da der Reibring 26 insgesamt mit einer Kraft F + F_{Verstärkung} gegen die Reibfläche 44 beaufschlagt wird und somit eine verstärkte Reibverbindung mit der Reibfläche 44 ausbildet.

Nach einem Angleichen der Drehzahlen zwischen Nabe 14 bzw. Schaltmuffe 18 und Gangrad 28 reicht die Schaltkraft F aus, um den Sperrring 24 um den Indexwinkel zurückzudrehen und die Schaltmuffe 18 über die Verzahnung 60 auf die gangradseitige Schaltverzahnung 30 aufzuschieben, sodass der gewünschte Gang geschaltet ist (Figur 10).

Die Figuren 11 und 12 zeigen die Synchronisierung 12 gemäß einer dritten Ausführungsform.

Wie in den vorhergehenden Ausführungsformen ist auch hier in der Nabe 14 mindestens ein Druckstück 58 angeordnet, das die axiale Schaltkraft F und eine damit einhergehende Schaltbewegung der Schaltmuffe 18 auf die Synchronisierungsbaugruppe 22 überträgt. Bevorzugt sind mehrere, insbesondere drei Druckstücke 58 gleichmäßig über den Umfang der Nabe 14 verteilt, um die Schaltkraft F zu übertragen.

Im Unterschied zu den vorhergehenden Ausführungsformen wirkt das Druckstück 58 hier jedoch unmittelbar mit dem Reibring 26 zusammen, indem es in axialer Richtung 20 formschlüssig mit dem Reibring 26 gekoppelt ist. Diese axiale Kopplung erfolgt durch eine Steckverbindung, bei der ein radialer Fortsatz 64 des Druckstücks 58 radial in eine Öffnung 66 des Reibrings 26 geschoben wird.

Gemäß den Figuren 11 und 12 ist in axialer Richtung 20 gesehen auf beiden Seiten der Schaltmuffe 18 jeweils eine Synchronisierungsbaugruppe 22 angeordnet, und das Druckstück 58 ist mit beiden Reibringen 26 der Synchronisierungsbaugruppen 22 gekoppelt.

Diese Kopplung der gegenüberliegenden Synchronisierungsbaugruppen 22 aufgrund der Zwangsführung am Druckstück 58 bzw. an den Druckstücken 58 führt zu einer deutlichen Reduktion der Schwirrneigung und der Rasselgeräusche innerhalb des Schaltgetriebes 10.

## Patentansprüche

1. Synchronisierung für ein Schaltgetriebe (10), mit
einer Nabe (14), die einer Getriebewelle (16) zugeordnet ist,
einer Schaltmuffe (18), die drehfest auf der Nabe (14) angeordnet ist, jedoch in axialer Richtung (20) der Getriebewelle (16) auf der Nabe (14) begrenzt verschiebbar ist,
einer gangradseitigen Schaltverzahnung (30), mit der die Schaltmuffe (18) gekoppelt werden kann, und
einer Synchronisierungsbaugruppe (22), die aus einem Sperrring (24) und einem Reibring (26) besteht,
**dadurch gekennzeichnet, dass** der Reibring mit Andruckflächen (42) versehen ist, die sich am Sperrring (24) abstützen können,
wobei der Sperrring (24) mit Schrägflächen (40) versehen ist, die mit den Andruckflächen (42) derart zusammenwirken können, dass durch Verstärkung der in axialer Richtung (20) von der Schaltmuffe (18) ausgeübten Schaltkraft (F) eine axiale Andruckkraft (F_{Verstärkung}) des Reibrings (26) gegen eine Reibfläche (44) erzeugt wird, die mit einem Gangrad (28) des Schaltgetriebes (10) gekoppelt ist.

2. Synchronisierung nach Anspruch 1, **dadurch gekennzeichnet, dass** in der Nabe (14) mindestens ein Druckstück (58) angeordnet ist, das eine axiale Schaltbewegung der Schaltmuffe (18) auf die Synchronisierungsbaugruppe (22) überträgt.

3. Synchronisierung nach Anspruch 2, **dadurch gekennzeichnet, dass** das Druckstück (58) mit dem Reibring (26) zusammenwirkt.

4. Synchronisierung nach Anspruch 2 oder Anspruch 3, **dadurch gekennzeichnet, dass** das Druckstück (58) in axialer Richtung (20) formschlüssig mit dem Reibring (26) gekoppelt ist.

5. Synchronisierung nach einem der Ansprüche 2 bis 4, **dadurch gekennzeichnet, dass** auf beiden Seiten der Schaltmuffe (18) eine Synchronisierungsbaugruppe (22) angeordnet ist und das Druckstück (58) mit den beiden Reibringen (26) gekoppelt ist.

6. Synchronisierung nach einem der vorhergehenden Ansprüche, **dadurch gekennzeichnet, dass** der Sperrring (24) relativ zur Schaltmuffe (18) um einen Indexwinkel drehbar ist.

7. Synchronisierung nach einem der vorhergehenden Ansprüche, **dadurch gekennzeichnet, dass** die Nabe (14) und der Sperrring (24) in Umfangsrichtung durch ineinandergreifende Vorsprünge (54) und Ausnehmungen (56) miteinander gekoppelt sind.

8. Synchronisierung nach einem der vorhergehenden Ansprüche, **dadurch gekennzeichnet, dass** die Andruckflächen (42) des Reibrings (26) an Mitnehmern (52) vorgesehen sind, die sich in axialer Richtung (20) durch den Sperrring (24) erstrecken.

9. Synchronisierung nach einem der vorhergehenden Ansprüche, **dadurch gekennzeichnet, dass** eine Feder (46) vorgesehen ist, welche die Synchronisierungsbaugruppe (22) in ihre Ausgangsstellung beaufschlagt.

10. Synchronisierung nach Anspruch 8 und 9, **dadurch gekennzeichnet, dass** sich die Feder (46) an den Mitnehmern (52) abstützt.

11. Synchronisierung nach Anspruch 9, **dadurch gekennzeichnet, dass** die Feder (46) zwischen dem Reibring (26) und dem Gangrad (28) des Schaltgetriebes (10) angeordnet ist.

## Claims

1. A synchronization for a manual gearbox (10), comprising a hub (14) associated with a gear shaft (16),
a shifting sleeve (18) which is arranged on the hub (14) for joint rotation therewith, but is displaceable to a limited extent on the hub (14) in the axial direction (20) of the gear shaft (16),
a shift toothing (30) on the speed change gear side, to which the shifting sleeve (18) can be coupled, and
a synchronization assembly (22) consisting of a locking ring (24) and a friction ring (26),
**characterized in that** the friction ring is provided with pressure surfaces (42) which can rest against the locking ring (24),
the locking ring (24) being provided with oblique surfaces (40) which can cooperate with the pressure surfaces (42) such that by amplification of the shifting force (F) exerted by the shifting sleeve (18) in the axial direction (20), an axial contact pressure (F_{amplification}) of the friction ring (26) against a friction surface (44) is generated which is coupled to a speed change gear (28) of the manual gearbox (10).

2. The synchronization according to claim 1, **characterized in that** at least one thrust piece (58) is arranged in the hub (14), the thrust piece transmitting an axial shifting movement of the shifting sleeve (18) to the synchronization assembly (22).

3. The synchronization according to claim 2, **characterized in that** the thrust piece (58) cooperates with the friction ring (26).

4. The synchronization according to claim 2 or claim 3, **characterized in that** the thrust piece (58) is coupled to the friction ring (26) with an interlocking fit in the axial direction (20).

5. The synchronization according to any of claims 2 to 4, **characterized in that** a synchronization assembly (22) is arranged on both sides of the shifting sleeve (18), and the thrust piece (58) is coupled to the two friction rings (26).

6. The synchronization according to any of the preceding claims, **characterized in that** the locking ring (24) is rotatable relative to the shifting sleeve (18) by an index angle.

7. The synchronization according to any of the preceding claims, **characterized in that** the hub (14) and the locking ring (24) are coupled to each other in the circumferential direction by projections (54) and recesses (56) which engage into each other.

8. The synchronization according to any of the preceding claims, **characterized in that** the pressure surfaces (42) of the friction ring (26) are provided on entrainment means (52) which extend through the locking ring (24) in the axial direction (20).

9. The synchronization according to any of the preceding claims, **characterized in that** a spring (46) is provided which urges the synchronization assembly (22) into its starting position.

10. The synchronization according to claims 8 and 9, **characterized in that** the spring (46) rests against the entrainment means (52).

11. The synchronization according to claim 9, **characterized in that** the spring (46) is arranged between the friction ring (26) and the speed change gear (28) of the manual gearbox (10).

## Revendications

1. Synchronisation pour boîte de vitesses (10), comportant :
un moyeu (14) associé à un arbre d'entraînement (16),
un manchon coulissant (18) qui est monté solidaire en rotation sur le moyeu (14) mais qui est déplaçable de manière limitée sur le moyeu (14) dans le sens axial (20) de l'arbre d'entraînement (16),
une denture de changement de vitesse (30) côté pignon de vitesse qui est apte à être couplée au manchon coulissant (18), et
un ensemble de synchronisation (22) composé d'un anneau de blocage (24) et d'un anneau de friction (26),
**caractérisée en ce que** l'anneau de friction est pourvu de surfaces d'application (42) qui peuvent prendre appui sur l'anneau de blocage (24),
l'anneau de blocage (24) étant pourvu de surfaces obliques (40) qui sont aptes à coopérer avec les surfaces d'application (42) de telle sorte que grâce à l'amplification de la force de changement de vitesse (F) exercée par le manchon coulissant (18) dans le sens axial (20), une force d'application axiale (F_{amplification}) de l'anneau de friction (26) contre une surface de friction (44) qui est couplée à un pignon de vitesse (28) de la boîte de vitesses (10) est produite.

2. Synchronisation selon la revendication 1, **caractérisée en ce qu'**au moins une pièce de pression (58) est agencée dans le moyeu (14) laquelle transmet un mouvement de changement de vitesse axial du manchon coulissant (18) à l'ensemble de synchronisation (22).

3. Synchronisation selon la revendication 2, **caractérisée en ce que** la pièce de pression (58) coopère avec l'anneau de friction (26).

4. Synchronisation selon la revendication 2 ou la revendication 3, **caractérisée en ce que** la pièce de pression (58) est couplée à l'anneau de friction (26) dans le sens axial (20) par coopération de formes.

5. Synchronisation selon l'une des revendications 2 à 4, **caractérisée en ce qu'**un ensemble de synchronisation (22) est agencé de part et d'autre du manchon coulissant (18) et **en ce que** la pièce de pression (58) est couplée aux deux anneaux de friction (26).

6. Synchronisation selon l'une des revendications précédentes, **caractérisée en ce que** l'anneau de blocage (24) est mobile en rotation par rapport au manchon coulissant (18) sous un angle d'indice.

7. Synchronisation selon l'une des revendications précédentes, **caractérisée en ce que** le moyeu (14) et l'anneau de blocage (24) sont aptes à être couplés l'un à l'autre dans le sens périphérique au moyen de saillies (54) et d'évidements (56) qui s'enclenchent les uns dans les autres.

8. Synchronisation selon l'une des revendications précédentes, **caractérisée en ce que** les surfaces d'application (42) de l'anneau de friction (26) sont prévues sur des entraîneurs (52) qui s'étendent dans le sens axial (20) à travers l'anneau de blocage (24).

9. Synchronisation selon l'une des revendications précédentes, **caractérisée en ce qu'**il est prévu un ressort (46) qui sollicite l'ensemble de synchronisation (22) dans sa position initiale.

10. Synchronisation selon les revendications 8 et 9, **caractérisée en ce que** le ressort (46) prend appui sur les entraîneurs (52).

11. Synchronisation selon la revendication 9, **caractérisée en ce que** le ressort (46) est agencé entre l'anneau de friction (26) et le pignon de vitesse (28) de la boîte de vitesses (10).
